# EUROPÄISCHE PATENTSCHRIFT

(11) **EP 2 408 616 B1**
(45) Veröffentlichungstag und Bekanntmachung des Hinweises auf die Patenterteilung: **07.05.2014**
(21) Anmeldenummer: 10708723.1
(22) Anmeldetag: 09.03.2010
(51) Int. Cl.: B32B 15/08, B32B 27/20, B65D 65/40, B65D 77/00, B65D 81/00

(54) **DECKFOLIE ALS DURCHDRÜCKFOLIE FÜR EINE BLISTERPACKUNG**
COVER FOIL DESIGNED AS PUSH-THROUGH FOIL FOR A BLISTER PACKAGE
FILM DE COUVERTURE UTILISÉ COMME FILM À PERÇAGE PAR PRESSION POUR UN EMBALLAGE BLISTER

(30) Priorität: 20.03.2009 CH 433092009
(43) Veröffentlichungstag der Anmeldung: 25.01.2012
(73) Patentinhaber: Amcor Flexibles Kreuzlingen Ltd., 8280 Kreuzlingen (CH)
(72) Erfinder: BRANDL, Oliver, 78467 Konstanz (DE); SENGER, Karl-Heinz, 78239 Rielasingen-Worblingen (DE); PASBRIG, Erwin, 78224 Singen (DE)
(74) Vertreter: Gernet, Samuel Andreas
(86) Internationale Anmeldenummer: PCT/EP2010/001469
(87) Internationale Veröffentlichungsnummer: WO 2010/105756

(56) Entgegenhaltungen:
- EP-A1- 1 733 872
- US-A1- 2007 160 789
- US-B1- 6 991 095

## Beschreibung

Die Erfindung betrifft eine Deckfolie als Durchdrückfolie für eine Blisterpackung gemäss dem Oberbegriff von Anspruch 1.

Es ist allgemein bekannt, gegen Feuchtigkeit und Sauerstoff empfindliche Produkte durch Verpacken in Kunststoffmaterialien vor schädlichen atmosphärischen Einflüssen zu schützen. Feuchteempfindliche Produkte können beispielsweise mit einem für Wassermoleküle praktisch undurchlässigen Kunststofffilm umhüllt werden. Als Barriere gegen den Durchtritt von Feuchtigkeit kann z.B. ein Film aus einem Polyethylen hoher Dichte (HDPE) oder aus einem Polyvinylidenchlorid-Methylacrylat-Copolymer (PVDC-MA) verwendet werden. Filme aus orientiertem Polypropylen (oPP), gegebenenfalls metallisiert, oder metallisierte Polyesterfilme, dienen ebenfalls als Barrierematerial gegen Feuchtigkeitsdurchtritt. Weiter sind Metallfolien als Barrierematerial gegen den Durchtritt von Feuchtigkeit und/oder Sauerstoff bekannt und werden oft im Verbund mit Kunststofffilmen eingesetzt. Eine gute Barrierewirkung gegen Wasserdampf und Gase kann auch mit einer Schicht aus Ethylen-Vinylalkohol-Copolymer (EVOH) erreicht werden.

Obschon heute Laminate mit Barriereschichten mit hoher Durchtrittssperrwirkung gegen Feuchtigkeit und Sauerstoff bekannt sind, kann der Durchtritt von Feuchtigkeit gerade bei gesiegelten Verpackungen nicht vollständig verhindert werden, da die Kanten der Laminate durch die Barriereschicht nicht geschützt sind. Über diese ungeschützten Kanten im Bereich von Siegelungen kann Feuchtigkeit und Sauerstoff in das Innere heissgesiegelter Verpackungen eindringen und die Qualität feuchteempfindlicher Produkte beeinträchtigen.

Aus WO-A-2004/080808 sind mehrschichtige Filme mit einer Barriereschicht und mit einer Feuchte adsorbierendes Material enthaltenden Siegelschicht bekannt. Die Filme dienen zum Verpacken feuchteempfindlicher Gegenstände, wie z.B. Diagnostik-Teststreifen, und werden entweder nach Faltung gegen sich selbst oder gegen einen zweiten Film heissgesiegelt. Als Feuchte adsorbierendes Material mit starker Wasserbindung wird bevorzugt Kalziumoxid (CaO) eingesetzt.

Aus WO-A-2007/104344 ist es bekannt, zum Verpacken feuchteempfindlicher Produkte, wie Tabletten und Pulvern, Blisterpackungen mit einem Blisterbodenteil aus einem Laminat mit einer Barriereschicht gegen Wasserdampf und Gase einzusetzen. Zusätzlich ist auf der Seite der Barriereschicht, welche gegen die Innenseite des Blisterbodenteils und gegen eine das Blisterbodenteil verschliessende Deckfolie gerichtet ist, eine beispielsweise CaO als Trockenmittel enthaltende Schicht aus Polyolefin angeordnet. Eine als Durchdrückfolie ausgestaltete Deckfolie weist beispielsweise den folgenden Schichtaufbau auf: Siegelschicht / Aluminiumfolie / Druckvorlack / Bedruckung / Drucküberlack.

Typischerweise weist eine Durchdrückfolie von Blisterpackungen eine 20 µm dicke Aluminiumfolie im Zustand "hart" auf. Um die Durchdrückbarkeit auch für schwächere Personen, wie z.B. Senioren, zu gewährleisten, darf auch die u.a. zur Siegelung gegen ein Blisterbodenteil benötigte Innenschicht eine gewisse Dicke nicht überschreiten. Eine herkömmliche Durchdrückfolie mit einer LDPE Beschichtung als Siegelschicht ist beispielsweise wie folgt aufgebaut:
Lack, 1-2 g/m² / Aluminiumfolie hart, 20 µm / Primer 1 g/m² / LDPE 15 g/m².

Die Wasseraufnahmekapazität von Blisterbodenteilen mit einer Trockenmittel enthaltenden Innenschicht ist wegen der beschränkten Dicke der Innenschicht auf Flächengewichte der Innenschicht inklusive Trockenmittel von typischerweise etwa 35-65 g/m² begrenzt. Der Trockenmittelanteil liegt typisch bei etwa 30 bis 50 % des Gesamtflächengewichts der mit Trockenmittel beladenen Schicht. Um aber auch "feuchte Tabletten" mit Hilfe eines Trockenmittels zu trocknen, ist grundsätzlich eine möglichst hohe Wasseraufnahmekapazität in der Blisterpackung anzustreben.

Der Erfindung liegt die Aufgabe zugrunde, die Wasseraufnahmekapazität von Blisterpackungen zum Verpacken von feuchteempfindlichen Produkten mit einer Deckfolie als Durchdrückfolie und mit einem eine Trockenmittel enthaltende Schicht aufweisenden Blisterbodenteil weiter zu erhöhen.

Zur erfindungsgemässen Lösung der Aufgabe führt eine Deckfolie mit den Merkmalen von Anspruch 1.

Die Erfindung macht sich die allgemein an Verpackungsfolien und daraus hergestellten Verpackungen gemäss WO-A-2004/080808 und an Blisterbodenteilen gemäss WO-A-2007/104344 gewonnenen Erkenntnisse zunutze.

Überraschenderweise hat sich herausgestellt, dass die Innenschicht, d.h., die auf der zur Siegelung gegen ein Blisterbodenteil vorgesehenen Seite der Aluminiumfolie angeordnete, Trockenmittel enthaltende Kunststoffschicht gegenüber den bei Durchdrückfolien nach dem Stand der Technik üblichen, siegelfähigen Innenschichten eine zwei- bis dreifache Dicke aufweisen kann, ohne dass die Durchdrückbarkeit der Folie abnimmt. Der Grund hierfür liegt darin, dass die Trockenmittel tragende Schicht im Vergleich zu Schichten ohne Trockenmittel eine viel höhere Brüchigkeit aufweisen. Erst diese Erkenntnis machte den Weg frei für die Entwicklung der erfindungsgemässen Deckfolie mit einem erheblichen und daher wirtschaftlich sinnvollen Gehalt an Trockenmittel.

Die Trockenmittel enthaltende Kunststoffschicht enthält als Trockenmittel bevorzugt wenigstens ein Oxid aus der Gruppe der Alkali- und Erdalkalimetalle. Eine besonders bevorzugte, Trockenmittel enthaltende Kunststoffschicht enthält als Trockenmittel Kalziumoxid (CaO), insbesondere 0,5 bis 95 Gew.-% CaO, vorzugsweise 10 bis 65 Gew.-%.

Es können aber auch andere, als Trockenmittel geeignete Substanzen eingesetzt werden, wie z. B. Silicate, Silicagele, Alumo-Silicate, physikalisch trocknende Substanzen, Kristallwasser aufnehmende Substanzen, Zucker und Hydroxyl-Gruppen tragende Verbindungen.

Da Trockenmittel üblicherweise als Pulver in körniger Form vorliegen, muss darauf geachtet werden, dass die Körner des Trockenmittels nicht in die Aluminiumfolie drücken und diese durchstossen, da auf diese Weise in der Aluminiumfolie entstandene Löcher die Integrität der Blisterpackung zerstören und den angestrebten hohen Feuchtschutz zunichte machen würden. Trockenmittel werden üblicherweise in der Form eines Trockenmittel tragenden Masterbatches in einem Extrusions- oder Coextrusionsverfahren auf die Aluminiumfolie aufgebracht. Dabei darf die Schichtdicke der das Trockenmittel tragenden Schicht nicht zu gross sein, da sonst der vor allem für Senioren wichtige, relativ niedrige Kraftaufwand beim Herausdrücken einer Tablette überschritten wird und die Durchdrückbarkeit der Deckfolie verloren geht. Bei den auf dem Markt erhältlichen, Trockenmittel tragenden Masterbatches aus beispielsweise Polyethylen (PE) und CaO weist das Trockenmittel Partikelgrössen (d₁₀₀) > 10-20 µm auf. Solche Partikelgrössen sind in der Lage, üblicherweise für Durchdrückfolien im Zustand "hart" eingesetzte Aluminiumfolien einer Dicke von z. B. 20 µm zu durchstossen.

Aus diesem Grund kann es sich als zweckmässig erweisen, zwischen der Aluminiumfolie und der das Trockenmittel enthaltenden Kunststoffschicht eine Pufferschicht aus Kunststoff anzuordnen.

Die das Trockenmittel enthaltende Kunststoffschicht und/oder die Pufferschicht und/oder die Siegelschicht bestehen bevorzugt aus Polyolefin, vorzugsweise aus Polyethylen (PE), insbesondere aus einem Polyethylen hoher Dichte (HDPE) und/oder einem linearen Polyethylen niedriger Dichte (LLDPE) und/oder einem Polyethylen niedriger Dichte (LDPE) und/oder aus Polypropylen (PP) und enthalten optional Bestandteile säuremodifizierter Polyolefine, wie lonomere, EAA oder PP-MSA. Diese säuremodifizierten Polyolefine wirken als Haftvermittler, so dass in gewissen Fällen auf einen separaten Primer verzichtet werden kann.

Die Pufferschicht, die das Trockenmittel enthaltende Kunststoffschicht und die Siegelschicht sind bevorzugt aus einer auf die Aluminiumfolie aufgetragenen Coextrusionsschicht gebildet.

Die Aluminiumfolie kann auf der mit der Siegelschicht versehenen Seite mit einem Haftvermittler, insbesondere mit einem wasser- oder lösemittelbasierten Primer oder mit einem polymeren Haftvermittler beschichtet sein.

Ein typischer Aufbau einer Deckfolie ist z. B.:
Lack, 1-2 g/m²
Aluminiumfolie 20 µm, hart
Primer, 1 g/m²
LDPE, 12 g/m² als Pufferschicht
PE + Trockenmittel, 30 g/m²
LDPE, 4 g/m² als Siegelschicht

Zusätzlich kann die Deckfolie bedruckt und die Bedruckung gegebenenfalls überlackiert sein.

Messungen zeigen, dass bei einer Trockenmittel enthaltenden Kunststoffschicht bis zu einem Flächengewicht von ca. 38 g/m² keine Verschlechterung der Durchdrückbarkeit im Vergleich zu einer Standard Durchdrückfolie mit dem Schichtaufbau
Lack, 1-2 g/m²
Aluminiumfolie 20 µm, hart
Primer, 1 g/m²
LDPE, 15 g/m² als Siegelschicht
festgestellt wird.

## Patentansprüche

1. Deckfolie als Durchdrückfolie für eine Blisterpackung zum Verpacken von feuchteempfindlichen Produkten, mit einer Aluminiumfolie als Barriereschicht gegen den Durchtritt von Wasserdampf und Gasen und einer Siegelschicht zur Siegelung gegen ein Blisterbodenteil, wobei auf der mit der Siegelschicht versehenen Seite der Aluminiumfolie eine Feuchte adsorbierendes Trockenmittel enthaltende Kunststoffschicht angeordnet ist,
**dadurch gekennzeichnet, dass**
die das Trockenmittel enthaltenden Kunststoffschicht aus Polyethylen (PE) ist, und zwischen der Aluminiumfolie und der das Trockenmittel enthaltenden Kunststoffschicht eine Pufferschicht aus Polyehylen niedriger Dichte (LDPE) angeordnet ist, und die Pufferschicht, die das Trockenmittel enthaltende Kunststoffschicht und die Siegelschicht aus einer auf die Aluminiumfolie aufgetragenen Coextrusionsschicht gebildet sind.

2. Deckfolie nach Anspruch 1, **dadurch gekennzeichnet, dass** das Trockenmittel wenigstens ein Oxid aus der Gruppe der Alkali- und Erdalkalimetalle enthält.

3. Deckfolie nach Anspruch 2, **dadurch gekennzeichnet, dass** die Trockenmittel enthaltende Kunststoffschicht als Trockenmittel Kalziumoxid (CaO), insbesondere 0,5 bis 95 Gew.-% CaO, vorzugsweise 10 bis 65 Gew.-% CaO, enthält.

4. Deckfolie nach Anspruch 1, **dadurch gekennzeichnet, dass** als Trockenmittel Silicate, Silicagele, Alumo-Silicate, physikalisch trocknende Substanzen, Kristallwasser aufnehmende Substanzen, Zucker und Hydroxyl-Gruppen tragende Verbindungen eingesetzt werden.

5. Deckfolie nach Anspruch 1, **dadurch gekennzeichnet, dass** die Siegelschicht aus Polyethylen (PE), insbesondere aus einem Polyethylen niedriger Dichte (LDPE), besteht.

6. Deckfolie nach einem der Ansprüche 1 bis 5, **dadurch gekennzeichnet, dass** die Aluminiumfolie auf der mit der Siegelschicht versehenen Seite mit einem Haftvermittler, insbesondere mit einem wasser- oder lösemittelbasierten Primer oder mit einem polymeren Haftvermittler beschichtet ist.

7. Blisterpackung mit einer Deckfolie gemäss einem der vorangehenden Ansprüche zum Verpacken von pharmazeutischen Produkten, wie feuchteempfindlichen Tabletten und Pulvern.

## Claims

1. Cover foil as a push-through foil for a blister pack for packaging moisture-sensitive products, comprising an aluminium foil as a barrier layer against the penetration of water vapour and gases and a sealing layer for sealing against a blister base part, a plastics material layer containing a moisture-adsorbing drying agent being arranged on the side of the aluminium foil provided with the sealing layer, **characterised in that** the plastics material layer containing the drying agent is made of polyethylene (PE), and a buffer layer made of low-density polyethylene (LDPE) is arranged between the aluminium foil and the plastics material layer containing the drying agent, and the buffer layer, the plastics material layer containing the drying agent and the sealing layer are formed by a coextrusion layer applied to the aluminium foil.

2. Cover foil according to claim 1, **characterised in that** the drying agent comprises at least one oxide selected from the group consisting of alkaline metals and alkaline earth metals.

3. Cover foil according to claim 2, **characterised in that** the plastics material layer containing the drying agent comprises, as the drying agent, calcium oxide (CaO), more particularly 0.5 to 95 % by weight CaO, preferably 10 to 65 % by weight CaO.

4. Cover foil according to claim 1, **characterised in that** silicates, silica gels, aluminosilicates, physically drying substances, substances which absorb water of crystallisation, compounds carrying sugar and hydroxyl groups are used as the drying agent.

5. Cover foil according to claim 1, **characterised in that** the sealing layer consists of polyethylene (PE), more particularly of a low-density polyethylene (LDPE).

6. Cover foil according to any of claims 1 to 5, **characterised in that** the aluminium foil is coated on the side provided with the sealing layer with an adhesion promoter, more particularly with a water-based or solvent-based primer or with a polymeric adhesion promoter.

7. Blister pack comprising a cover foil according to any of the preceding claims for packaging pharmaceutical products, such as moisture-sensitive tablets and powders.

## Revendications

1. Feuille de couverture servant de feuille à ouverture déchirable pour un conditionnement sous blister destinée à conditionner des produits sensibles à l'humidité, comportant une feuille d'aluminium en tant que couche barrière contre la pénétration de vapeur d'eau et de gaz, et une couche de scellement destinée à un scellement à une pièce de fond du blister, une couche de matériau plastique contenant un agent dessiccant adsorbant l'humidité étant disposé sur le côté de la feuille d'aluminium pourvue de la couche de scellement, **caractérisée en ce que** la couche de matériau plastique contenant le dessiccant est en polyéthylène (PE), et une couche tampon en polyéthylène basse densité (PEBD) est disposée entre la feuille d'aluminium et la couche de matériau plastique contenant le dessiccant, et la couche tampon, la couche de matériau plastique contenant le dessiccant et la couche de scellement sont formées à partir d'une couche de co-extrusion appliquée sur la feuille d'aluminium.

2. Feuille de couverture selon la revendication 1, **caractérisée en ce que** le dessiccant contient au moins un oxyde du groupe des métaux alcalins et alcalinoterreux.

3. Feuille de couverture selon la revendication 2, **caractérisée en ce que** la couche de matériau plastique contenant le dessiccant contient en tant que dessiccant de l'oxyde de calcium (CaO), en particulier 0,5 à 95 % en poids de CaO, de préférence 10 à 65 % en poids de CaO.

4. Feuille de couverture selon la revendication 1, **caractérisée en ce qu'**on utilise en tant que dessiccant des silicates, des gels de silice, des aluminosilicates, des substances à séchage physique, des substances absorbant l'eau de cristallisation, des sucres et des composés portant des groupes hydroxyle.

5. Feuille de couverture selon la revendication 1, **caractérisée en ce que** la couche de scellement est constituée de polyéthylène (PE), en particulier d'un polyéthylène basse densité (PEBD).

6. Feuille de couverture selon l'une des revendications 1 à 5, **caractérisée en ce que** la feuille d'aluminium est, sur sa face pourvue de la couche de scellement, revêtue d'un promoteur d'adhérence, en particulier d'une couche primaire à base aqueuse ou à base d'un solvant, ou d'un promoteur d'adhérence polymère.

7. Conditionnement sous blister comportant une feuille de couverture selon l'une des revendications précédentes pour conditionner des produits pharmaceutiques tels que des comprimés et des poudres sensibles à l'humidité.
